# DEMANDE DE BREVET EUROPEEN

(11) **EP 1 162 062 A2**
(43) Date de publication de la demande: **12.12.2001**
(21) Numéro de dépôt: 01420131.3
(22) Date de dépôt: 07.06.2001
(51) Int. Cl.: B32B 27/32, B65D 65/40

(54) **Film d'emballage pour denrée alimentaire, procédé de fabrication d'un tel film et produit alimentaire comprenant un tel film**

(30) Priorité: 08.06.2000 FR 0007374
(71) Demandeur: Burke Communication, 92800 Puteaux (FR)
(72) Inventeur: Hallier, Dominique, 26740 Sauzet (FR)
(74) Mandataire: Schouller, Jean-Philippe

(57) **Abrégé**

Ce film d'emballage est constitué d'une première feuille réalisée en polyéthylène, formée d'au moins deux couches de polyéthylène coextrudées, et d'une seconde feuille réalisée en polypropylène, fixée à ladite première couche.

Ce film d'emballage constitue une barrière efficace, notamment à l'égard de l'oxygène et de la vapeur d'eau. Il possède en outre un poids faible, et un prix de revient peu élevé.

## Description

La présente invention concerne un film d'emballage pour denrée alimentaire, un procédé de fabrication d'un tel film, ainsi qu'un produit alimentaire comprenant un tel film.

L'invention a trait au domaine technique des produits alimentaires, qui comprennent une denrée alimentaire et un film d'emballage entourant cette denrée. L'invention vise plus particulièrement un tel produit contenant une denrée destinée à l'alimentation animale, de type semi-humide, à savoir que la denrée correspondante possède une humidité relative d'environ 20%. De façon connue, un film d'emballage pour denrée alimentaire est formé de deux feuilles de polyéthylène, entre lesquelles est intercalée une couche intermédiaire, réalisée en papier. La liaison entre ces trois éléments constitutifs est réalisée par exemple par collage à l'eau.

Ce type de film d'emballage connu présente cependant certains inconvénients.

En effet, ce film est sujet à des problèmes relatifs à la qualité des soudures transversales intervenant dans sa réalisation. De plus, en cas de percement de la feuille intérieure de polyéthylène, en contact avec la denrée alimentaire, il se produit des passages de graisse en direction de la couche intermédiaire en papier. De tels passages génèrent des taches visibles depuis l'extérieur du film d'emballage, ce qui est désavantageux en termes d'esthétique du produit alimentaire.

Enfin, ce film d'emballage ne constitue pas une barrière satisfaisante à l'oxygène, ainsi qu'à la vapeur d'eau, de sorte que la denrée alimentaire qui y est renfermée n'est pas protégée de façon optimale.

L'invention se propose de réaliser un film d'emballage permettant de pallier l'ensemble des inconvénients de l'art antérieur évoqué ci-dessus.

A cet effet, elle a pour objet un film d'emballage pour denrée alimentaire possédant une humidité relative comprise entre 20 et 25%, caractérisé en ce qu'il est constitué d'une première feuille réalisée en polyéthylène, formée d'au moins deux couches de polyéthylène coextrudées, et d'une seconde feuille réalisée en polypropylène, fixée à ladite première couche.

Selon une caractéristique avantageuse de l'invention, la première feuille est réalisée en un polyéthylène basse densité.

Selon une caractéristique avantageuse de l'invention, la première feuille réalisée en polyéthylène possède une épaisseur comprise entre 80 et 120 micromètres.

Ceci permet de s'affranchir, dans une mesure importante, de tout passage de graisse au travers de la feuille en polyéthylène, destinée à être placé au voisinage de la denrée alimentaire.

Selon une caractéristique avantageuse de l'invention, l'épaisseur de la feuille réalisée en polypropylène est comprise entre 20 et 40 micromètres.

Selon une autre caractéristique de l'invention, la seconde feuille en polypropylène est collée directement à la première feuille en polyéthylène. Ce collage est par exemple réalisé à l'aide d'un adhésif de type aqueux.

L'invention a également pour objet un procédé de fabrication d'un film d'emballage pour denrée alimentaire, caractérisé en ce qu'il consiste à coextruder au moins deux couches réalisées en polyéthylène, de manière à former une première feuille réalisée en polyéthylène, puis à fixer une seconde feuille réalisée en polypropylène sur cette première feuille réalisée en polyéthylène.

Selon une caractéristique avantageuse de l'invention, on colle directement la seconde feuille, réalisée en polypropylène, sur la première feuille réalisée en polyéthylène.

La première étape intervenant dans la fabrication du film d'emballage conforme à l'invention est une étape de coextrusion d'au moins deux couches de polyéthylène. Cette étape est mise en oeuvre, de façon connue, par alimentation d'une filière au moyen de plusieurs extrudeuses, dont chacune assure la formation d'une couche de polyéthylène correspondante.

Puis, on fixe contre la feuille de polyéthylène ainsi obtenue, une feuille de polypropylène, par exemple par collage. A cet effet, on utilise avantageusement une feuille de polypropylène qui est aisément scellable, telle que, par exemple, une de celles commercialisées par la société MOBIL.

On réalise ensuite un motif sur la face libre de la feuille de polypropylène, visible une fois le film d'emballage disposé autour de la denrée alimentaire. A cet effet, on soumet cette feuille de polypropylène à une étape d'impression flexographique, selon des modalités connues.

L'invention a enfin pour objet un produit alimentaire, comprenant une denrée alimentaire possédant une humidité relative comprise entre 20 et 25% et un film d'emballage entourant cette denrée, caractérisé en ce que ce film d'emballage est tel que défini ci-dessus.

La fabrication de ce produit alimentaire est opérée de façon classique, à partir du film d'emballage conforme à l'invention. On affecte tout d'abord à ce film d'emballage une forme tubulaire, puis on remplit le volume intérieur de ce film au moyen de la denrée alimentaire considérée. Enfin, on procède à des séries de soudures transversales permettant de débiter le film selon plusieurs sacs ou poches successifs, constituant autant de produits alimentaires.

Une fois le produit alimentaire réalisé, la première feuille en polyéthylène est au contact de la denrée alimentaire, alors que la seconde feuille en polypropylène est visible par l'utilisateur.

L'invention permet de réaliser les objectifs précédemment mentionnés.

En effet, le film d'emballage conforme à l'invention constitue une barrière efficace, notamment à l'égard de l'oxygène et de la vapeur d'eau. De la sorte, il garantit une conservation satisfaisante de la denrée alimentaire qu'il renferme.

Par ailleurs, étant donné que le film d'emballage de l'invention s'affranchit de la présence d'une couche de papier, ceci permet d'éviter toute tache de graisse, qui serait discernable par un utilisateur. Une telle mesure est avantageuse en termes esthétiques.

Le film d'emballage conforme à l'invention possède un poids et un prix de revient inférieurs à ceux des films d'emballage connus de l'état de la technique.

Enfin, étant donné que le film d'emballage de l'invention fait appel à une couche extérieure de polypropylène, il possède une résistance améliorée à l'égard des frottements, par rapport à l'art antérieur. De plus, ce film possède une brillance remarquable, ce qui est avantageux en terme d'esthétique de l'ensemble du produit alimentaire.

## Revendications

1. Film d'emballage pour denrée alimentaire possèdant une humidité relative comprise entre 20 et 25%, **caractérisé en ce qu'**il est constitué d'une première feuille réalisée en polyéthylène, formée d'au moins deux couches de polyéthylène coextrudées, et d'une seconde feuille réalisée en polypropylène, fixée à ladite première couche.

2. Film d'emballage selon la revendication 1, **caractérisé en ce que** la première feuille est réalisée en un polyéthylène basse densité.

3. Film d'emballage selon l'une des revendications 1 ou 2, **caractérisé en ce que** la première feuille réalisée en polyéthylène possède une épaisseur comprise entre 80 et 120 micromètres.

4. Film d'emballage selon l'une des revendications 1 à 3, **caractérisé en ce que** l'épaisseur de la feuille réalisée en polypropylène est comprise entre 20 et 40 micromètres.

5. Film d'emballage selon l'une des revendications 1 à 4, **caractérisé en ce que** la seconde feuille en polypropylène est collée directement à la première feuille en polyéthylène.

6. Procédé de fabrication d'un film d'emballage pour denrée alimentaire, **caractérisé en ce qu'**il consiste à coextruder au moins deux couches réalisées en polyéthylène, de manière à former une première feuille réalisée en polyéthylène, puis à fixer une seconde feuille réalisée en polypropylène sur cette première feuille réalisée en polyéthylène.

7. Procédé selon la revendication 6, **caractérisé en ce qu'**on colle directement la seconde feuille, réalisée en polypropylène, sur la première feuille réalisée en polyéthylène.

8. Produit alimentaire, comprenant une denrée alimentaire possèdant une humidité relative comprise entre 20 et 25%, et un film d'emballage entourant cette denrée, **caractérisé en ce que** ce film d'emballage est conforme à l'une quelconque des revendications 1 à 5.
